(19) Europäisches Patentamt

European Patent Office

Office européen des brevets

(11) **EP 0 965 819 B1**

(12) **FASCICULE DE BREVET EUROPEEN**

(45) Date de publication et mention de la délivrance du brevet:
**04.08.2004 Bulletin 2004/32**

(51) Int Cl.$^7$: **G01D 3/036**, G01L 1/16

(21) Numéro de dépôt: **98810546.6**

(22) Date de dépôt: **16.06.1998**

(54) **Circuit électronique interface pour un capteur piézo-électrique**

Schnittstellenschaltungsanordnung für piezoelektrischen Sensor

Electronic interface circuit for a piezo-electric sensor

(84) Etats contractants désignés:
**BE CH DE DK ES FR GB IT LI NL**

(43) Date de publication de la demande:
**22.12.1999 Bulletin 1999/51**

(73) Titulaire: **VIBRO-METER SA**
**CH-1700 Fribourg (CH)**

(72) Inventeur: **Perriard, Jacques**
**1680 Romont (CH)**

(74) Mandataire:
**AMMANN PATENTANWAELTE AG BERN**
**Schwarztorstrasse 31**
**3001 Bern (CH)**

(56) Documents cités:
**US-A- 5 220 836**        **US-A- 5 339 285**
**US-A- 5 371 469**

## Description

L'invention concerne un circuit électronique d'interface selon le préambule de la revendication 1.

Des capteurs piézo-électriques sont utilisés par exemple pour mesurer les vibrations d'une machine. Pour cela le boîtier du capteur est fixé à la machine et des signaux électriques obtenus avec le capteur et représentatifs de vibrations de la machine sont transmis par un câble à un circuit électronique pour le traitement du signal de mesure obtenu avec le capteur. Ce dernier circuit peut être très éloigné du capteur. Dans une telle chaîne de mesure des potentiels parasites de mode commun, qu'on appelle aussi "frame voltage" et que l'on désigne souvent par Uframe apparaissent entre le boîtier du capteur et la masse (niveau de tension 0 V) du circuit électronique pour le traitement du signal de mesure et génèrent une tension d'erreur se superposant au signal de mesure obtenu avec le capteur. On peut avoir en outre un signal d'erreur additionnel résultant du fait que le blindage du câble d'interconnexion conduit un courant galvanique causé par la tension Uframe, un tel courant circulant entre le boîtier du capteur piézo-électrique et le boîtier du circuit électronique pour le traitement du signal de mesure. En outre, des perturbations électromagnétiques peuvent aussi produire un signal d'erreur non négligeable à l'entrée du circuit électronique pour le traitement du signal de mesure. Les arrangements connus pour réduire les différents signaux d'erreur sont soit pas assez efficaces ou relativement coûteux.

L'invention a donc pour but de fournir un circuit électronique d'interface permettant d'éviter de façon efficace et à un prix relativement bas que les différents signaux d'erreur mentionnés ci-dessus puissent se superposer au signal de mesure transmis au circuit électronique pour le traitement du signal de mesure. Un tel circuit électronique d'interface doit donc avoir des caractéristiques de fonctionnement telles qu'avec lui l'on puisse former une chaîne de mesure étant capable de:

1) éviter que la présence d'une tension de mode commun (frame voltage) apparaissant entre le boîtier, dans lequel est logé le capteur piézo-électrique, et le boîtier, dans lequel est logé le circuit électronique pour le traitement du signal de mesure, ne génère une tension d'erreur se superposant au signal de mesure à la sortie de ce circuit.

2) garantir que le blindage du câble d'interconnexion ne puisse en aucun cas conduire un courant galvanique entre le boîtier du capteur piézo-électrique et le boîtier du circuit électronique pour le traitement du signal de mesure.

3) assurer un bon comportement de la chaîne de mesure aux perturbations électromagnétiques

Selon l'invention ce buts sont atteints avec un circuit électronique d'interface (CEI) comportant les éléments définies dans la partie caractérisante de la revendication 1. Un tel circuit électronique d'interface (CEI) permet avantageusement de former une chaîne de mesure permettant d'atteindre les buts 1) à 3) mentionnés ci-dessus, et permet en particulier de ne pas avoir besoin d'un transformateur encombrant et relativement coûteux pour obtenir un découplage entre le circuit électronique relié au capteur et le circuit électronique pour le traitement du signal de mesure.

Dans ce qui suit, l'invention est exposée plus en détail à l'aide de dessins représentant quelques modes de réalisation seulement à titre d'exemple.

La figure 1 représente un schéma de principe d'un circuit électronique selon l'invention et ayant la fonction d'une interface entre un circuit de mesure comportant un capteur piézo-électrique 11, le dit circuit est représenté symboliquement par les sources de tension 27 et 28, et un circuit 12 pour le traitement du signal de mesure obtenu avec le capteur.

La figure 2 représente un schéma bloc d'un premier mode de réalisation d'un système comportant un circuit électronique d'interface du type représenté dans la figure 1. Dans cette figure le câble de liaison est du type 2 brins et il est muni d'un blindage.

La figure 3 représente un schéma bloc d'un deuxième mode de réalisation d'un système comportant un circuit électronique d'interface du type représente dans la figure 1. Dans cette figure le câble de liaison est du type 1 brin et il est muni d'un blindage, et le capteur a sa partie sensible isolée du boîtier

La figure 4 représente un schéma bloc d'une variante du système représenté dans la figure 3 à ceci près que le capteur a sa partie sensible reliée au boîtier.

La figure 5 représente un schéma bloc d'une partie additionnelle ajoutée au schéma de principe de la Fig. 1 pour obtenir une fonction additionnelle avec un circuit électronique d'interface selon l'invention.

La figure 6 représente un schéma bloc d'une partie additionnelle, laquelle peut être ajoutée au schéma de principe de la Fig. 1 au lieu de la partie additionnelle représenté par la figure 5 afin d'obtenir une fonction additionnelle avec un circuit électronique d'interface selon l'invention.

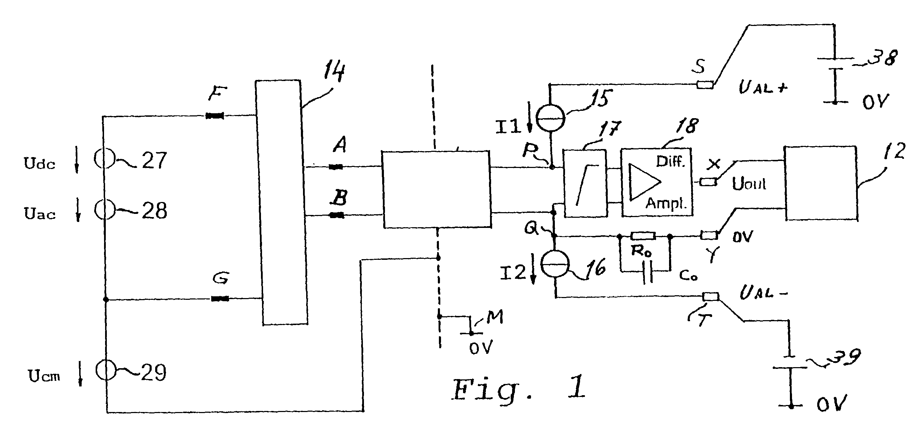

La figure 1 montre le schéma de principe d'un circuit électronique d'interface selon l'invention et ayant la fonction d'une interface entre un circuit de mesure comportant un capteur piézo-électrique et un circuit 12 pour le traitement du signal de mesure obtenu avec le capteur. Dans la description qui suit on désigne le circuit électronique d'interface selon l'invention par l'abréviation CEI et le circuit 12 est nommé simplement circuit de lecture 12, bien que sa fonction ne soit pas nécessairement limitée à la lecture du dit signal de mesure.

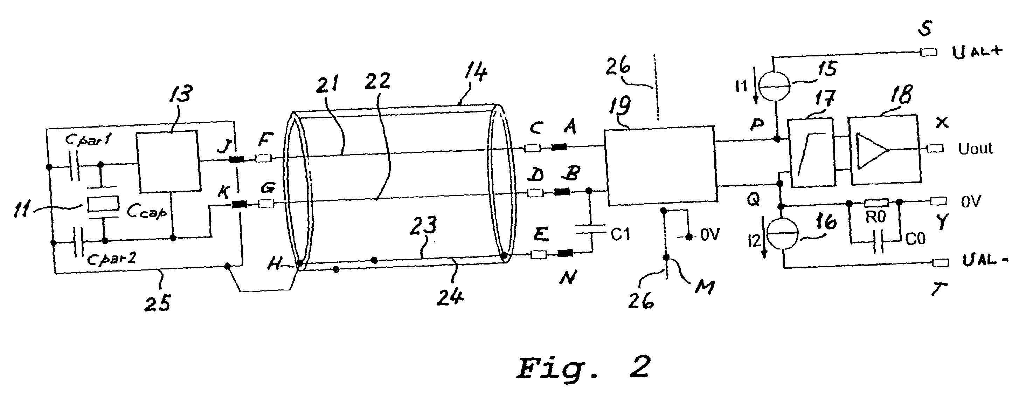

Comme décrit ci-dessous plus en détail avec référence aux figures 2 à 4, un circuit de mesure comportant un capteur piézo-électrique 11 et un circuit électronique 13 intégré avec lui est logé dans un boîtier 25. Un tel circuit de mesure est représenté symboliquement à la figure 1 par le montage en série d'une source de tension continue 27 fournissant une tension continue Udc et d'une source de tension alternative 28 fournissant une tension Uac. Une source de tension 29 représente une tension parasite Ucm, tension de mode commun produite par la tension Uframe mentionnée ci-dessus. Comme montré par la figure 1, le circuit de mesure que l'on vient de décrire est relié au reste du système représenté par la figure 1 au moyen d'un câble représenté symboliquement par un bloc 14.

Comme décrit ci-dessous en détail à l'aide des figures 2 à 4, un CEI selon l'invention sert, d'une part, à alimenter le dit capteur piézo-électrique avec un courant constant, et d'autre part, à conditionner un signal électrique obtenu de ce capteur à travers un circuit électronique, lequel comprend, par exemple, un modulateur de tension (voltage modulator) ayant une haute impédance d'entrée. Le CEI selon l'invention est connecté au capteur piézo-électrique par un câble non représenté à la figure 1, mais représenté en détail dans les figures 2 à 4. Le CEI selon l'invention et le circuit de lecture 12 sont logés dans un boîtier 26 représenté à la figure 1 par une ligne pointillée. Le boîtier 26 est la masse M du CEI, c'est à dire elle se trouve à un niveau de tension, lequel représente le niveau de tension 0 V pour le CEI selon l'invention et pour le circuit de lecture 12 connecté à celui-ci.

Comme représenté à la figure 1 la structure de base d'un CEI selon l'invention comprend

- une première source de courant 15,
- une deuxième source de courant 16, et
- un élément passif, par exemple une impédance Zo,

laquelle est branchée en parallèle entre la borne Q d'entrée de courant de la deuxième source de courant 16 et la masse M (niveau de tension 0 V) du CEI.

Dans un mode préféré de réalisation un CEI selon l'invention comprend en plus

- un filtre passe-haut 17 servant à recevoir un signal électrique obtenu du dit capteur piézo-électrique, et
- un étage amplificateur différentiel 18.

La première source de courant 15 est destinée à fournir un premier courant constant I1 au dit capteur 11 à travers une boucle de courant électrique. Un terminal S de la source de courant 15 est connecté à la borne positive d'une source de tension continue 38, laquelle fournit une tension UAL+.

La deuxième source de courant 16 est destinée à absorber un deuxième courant constant I2, lequel retourne du dit capteur 11 au dit circuit électronique à travers la dite boucle lorsque ledit capteur 11 est alimenté avec ledit premier courant I1. Un terminal T de la source de courant 16 est connecté à la borne négative d'une source de tension continue 39, laquelle fournit une tension UAL-.

La boucle de courant comprend la source de courant 15, le terminal P, le circuit relié aux terminaux P, Q comportant le capteur piézo-électrique, le terminal Q, et la source de courant 16.

L'impédance Zo se compose d'une résistance électrique Ro branchée en parallèle avec un condensateur Co. La différence entre les deux courants est absorbée par Zo.

Dans un mode préféré de réalisation d'un CEI selon l'invention, le circuit est configuré et dimensionné de sorte que I1 soit très proche de I2, de sorte que la tension se développant sur Ro soit la plus faible possible. En pratique il reste toujours une petite différence entre I1 et I2, laquelle est due aux tolérances des composants utilisés.

En réalisant la condition I1 pratiquement égal à I2 on garantit que les deux terminaux de connexion A, B de boucle sont à haute impédance d'entrée pour les signaux reçus dans la bande de fréquence du capteur. Cependant, comme I1 n'est pas rigoureusement égal à I2 la différence I1-I2 de ces courants est absorbée par la résistance Ro. Cette résistance ainsi que la différence de courant I1-I2 fixe le potentiel continu de mode commun sur les terminaux de la boucle de transmission (A, B).

Le filtre passe-haut 17 sert à découpler et par là à éliminer la composante continue du signal électrique obtenu au moyen du dit capteur piézo-électrique 11 et à fournir au circuit de lecture 12 un signal sans ladite composante. La dite composante continue du signal électrique obtenu est la tension de repos, Udc, de la boucle de courant. La tension de repos Udc est représentée dans le schéma de principe de la figure 1 comme une tension se développant aux bornes de la source de tension 27, laquelle forme part du schéma équivalent du capteur 11 y représenté.

L'étage amplificateur différentiel 18 a une haute impédance d'entrée servant au rejet du potentiel de mode commun (frame voltage) et à l'amplification du signal alternatif Uac fourni par le capteur piézo-électrique. L'amplificateur différentiel 18 est de préférence un amplificateur d'instrumentation. L'entrée de l'étage 18 est connectée avec la sortie du filtre passe-haut 17. La sortie (terminaux X, Y) de l'étage 18 fournit un signal Uout à l'entrée du circuit de lecture 12.

Dans un mode préféré de réalisation d'un CEI selon l'invention comprend en plus un filtre 19 pour l'élimination de perturbations électromagnétiques, ledit filtre 19 étant inséré entre les terminaux C, D du deuxième bout du câble et les terminaux d'entrée P, Q du dit filtre passe-haut.

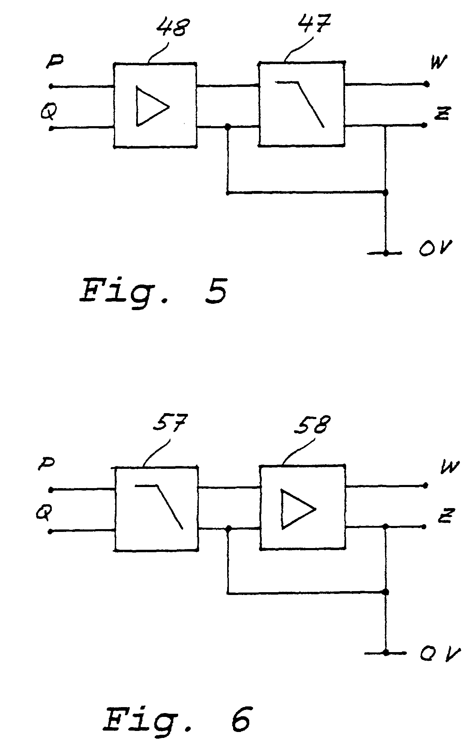

La Figure 5 montre un schéma bloc d'une partie additionnelle ajoutée au circuit représenté par le schéma de principe de la Fig. 1. Cette partie additionnelle comprend un amplificateur différentiel 48 ayant une haute impédance d'entrée dont l'entrée est connectée aux terminaux P et Q du schéma représente à la figure 1. L'amplificateur différentiel 48 est suivi d'un filtre passe-bas 47 servant à rejeter la composante du signal représentant la grandeur physique mesurée avec le capteur piézo-électrique 11 et de ne conserver et délivrer aux terminaux W , Z qu'un signal correspondant à la composante continue du signal, c.à.d. un signal correspondant à la tension de repos de la boucle.

Par surveillance de la tension de sortie du filtre passe-bas 47 il est possible de surveiller le niveau de la tension continue existant entre les deux terminaux de connexion A, B de boucle (tension de repos de boucle Udc) et de détecter une éventuelle panne dans la boucle de transmission, par exemple un dysfonctionnement au niveau de la connexion électrique du circuit électronique d'interface avec le capteur piézo-électrique 11.

La figure 6 représente un schéma bloc d'une partie additionnelle, laquelle peut être ajoutée au schéma de principe de la Fig. 1 au lieu de la partie additionnelle représentée par la figure 5 afin d'obtenir une fonction additionnelle avec un circuit électronique d'interface selon l'invention.

La partie additionnelle représentée par la figure 6 comprend un filtre passe-bas 57 et un étage amplificateur 58. Le filtre passe-bas 57 a une haute impédance d'entrée et reçoit à son entrée un signal électrique obtenu du capteur 11 à travers le câble 14, 34. Le filtre passe-bas 57 sert à éliminer la composante du signal obtenu avec le capteur, laquelle correspond à la grandeur physique mesurée avec celui-ci, et à fournir comme signal de sortie un signal représentatif de la composante continue dudit signal. L'entrée de l'étage amplificateur 58 est connectée avec la sortie du dit filtre passe-bas 57. Le signal de sortie de l'étage amplificateur 58 permet de détecter un dysfonctionnement au niveau de la connexion entre le capteur et le circuit électronique d'interface.

L'utilisation d'un CEI selon l'invention est illustré par les exemples suivants:

**Exemple 1**

La figure 2 montre une chaîne de mesure, dans laquelle un CEI selon l'invention sert d'une part à alimenter un capteur piézo-électrique 11 avec un courant constant et d'autre part à conditionner un signal électrique obtenu de ce capteur 11 à travers un circuit électronique 13 intégré avec ce capteur. Ce circuit électronique 13 comporte essentiellement un modulateur de tension 13, lequel est alimenté en courant. Au lieu d'un modulateur de tension on peut utiliser un convertisseur charge/tension alimenté en courant. Dans un mode préféré de réalisation le modulateur de tension ou le convertisseur charge/tension utilisé à sa place sont suivis d'un étage intégrateur.

Dans l'exemple représenté par la figure 2 le capteur piézo-électrique 11 et le circuit électronique 13 intégré avec lui sont isolés du boîtier 25, dans lequel le capteur 11 et son circuit électronique intégré 13 sont logés. La capacité Ccap mentionnée dans la figure 2 à côté du capteur 11 représente la capacité électrique de l'élément de mesure du capteur lui-même. Les Cpar1 et Cpar2 représentent les capacités parasites entre le capteur et le boîtier 25.

Un câble 14 à 2 brins 21, 22 et ayant blindage 23 recouvert d'un isolant 24 est utilisé pour l'interconnexion du CEI selon l'invention (représenté dans le cote droit du schéma de la figure 2) avec le capteur piézo-électrique 11 et le circuit électronique 13 intégré avec celui-ci. Deux terminaux F, G d'un bout du câble 14 sont connectés aux terminaux J, K à la sortie du circuit électronique 13 et les deux terminaux correspondants C, D du bout opposé du câble 14 sont connectés aux terminaux A, B du CEI selon l'invention.

Avec l'arrangement représenté par la figure 2, et grâce à l'utilisation d'un CEI selon l'invention, on obtient les caractéristiques de fonctionnement suivantes:

a) on évite que la présence d'une tension de mode commun ("frame voltage") apparaissant entre le boîtier 25, dans lequel est logé le capteur 11, et le boîtier 26, dans lequel est logé le CEI selon l'invention, ne génère une tension d'erreur se superposant au signal de mesure à la sortie de ce circuit.

b) on garantit que le blindage du câble d'interconnexion ne puisse en aucun cas conduire un courant galvanique entre le boîtier 25 du capteur et le boîtier 26, dont le niveau de tension définit le niveau de tension 0 V du CEI.

c) on assure un bon comportement de la chaîne de mesure aux perturbations électromagnétiques

**Exemple 2**

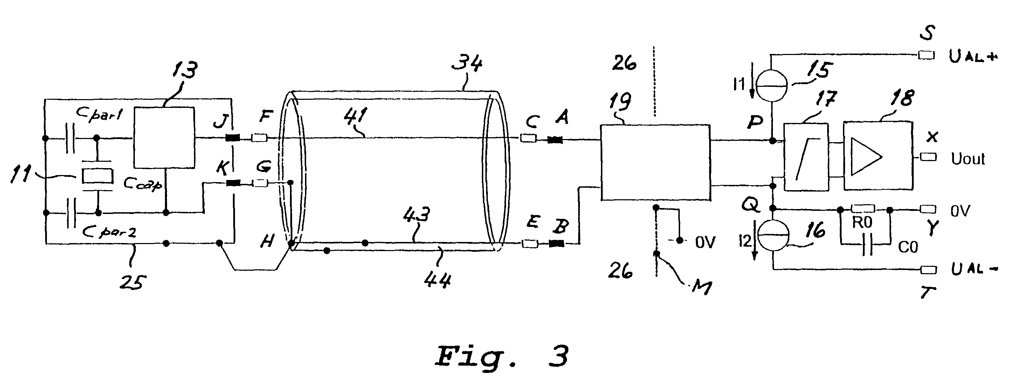

La figure 3 montre une chaîne de mesure ayant une structure similaire à celle représentée à la figure 2, mais dans laquelle un câble 34 à 1 brin 41 et avec un blindage 43 recouvert d'un isolant 44 est utilisé pour l'interconnexion du CEI selon l'invention (représenté dans le côté droit du schéma de la figure 3) avec le capteur piézo-électrique 11 et le circuit électronique 13 intégré avec lui. Le câble 34 est de préférence un câble coaxial isolé.

# EP 0 965 819 B1

Avec la chaîne de mesure représentée à la figure 2, on obtient aussi les caractéristiques de fonctionnement a) et c) indiquées ci-dessus pour l'exemple 2, mais par contre la caractéristique b) n'est pas obtenue, car un courant galvanique Ishield peut s'écouler au travers du blindage 43 du câble 34. La valeur de ce courant est

$$Ishield = Uframe / Ro \text{ pour les bases fréquences}$$

et vaut

$$Ishield = Uframe * Co *\omega \text{ pour les hautes fréquences.}$$

### Exemple 3

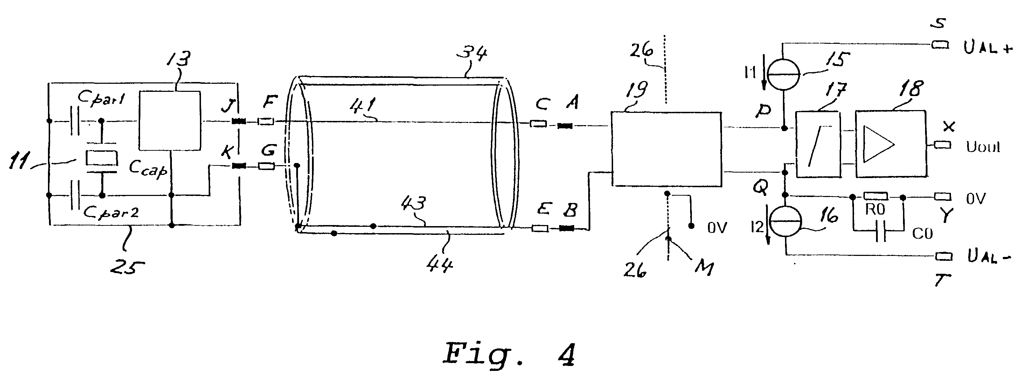

La figure 4 montre une chaîne de mesure ayant une structure presque identique à celle représenté à la figure 3, mais dans la quelle le terminal K du circuit électronique 13 intégré avec le capteur 11 est connecté avec le boîtier 25. Avec la chaîne de mesure représentée à la figure 4, on obtient le mêmes caractéristiques de fonctionnement qu'avec la chaîne de mesure représentée à la figure 3.

### Détermination des paramètres d'un CEI selon l'invention

Les équations et relations définissant le fonctionnement du circuit électronique d'interface (CEI) selon l'invention sont comme suit:

- La tension Ucap générée par le circuit électronique 13 intégré au capteur est:

$$(1.1) \qquad Ucap = Uac + Udc$$

- Le courant continu Iro, lequel traverse Ro est:

$$(1.2) \qquad Iro = I1 - I2$$

- La tension continue Uro de mode commun établie sur Ro due à l'inégalité des courants I1 et I2 est:

$$(1.3) \qquad Uro = Ro * ( I1 - I2)$$

La tension Uro devra être la plus petite possible dans le but de pouvoir traiter le maximum de tension de mode commun Ucmpeak (tension alternative).
La valeur de Ucmpeak est dictée par:

- la valeur de tension de repos maximale Udcmax,
- la valeur minimale des tensions d'alimentation UAL+, UAL-,
- la chute de tension maximale (Ui1, Ui2) aux bornes des sources de courant continue,
- la tension maximum continue de mode commun due à la dissymétrie I1 - I2: Uromax et par le signal AC de crête générée par le capteur (Uacpeak).

On doit satisfaire les relations

$$(1.4) \qquad Uromax + Uacpeak + Udcmax + Ucmpeak \leq (UAL+) -Ui1$$

et

$$(1.5) \qquad |Uromax| + |Uacpeak| + |Ucmpeak| \leq |UAL-| - |Ui2|$$

**5**

Des équations (1.4) et (1.5)on tire:

$$(1.6) \qquad Ucmpeak \leq (UAL+) - Ui1 - Uacpeak - Udcmax - Uromax$$

et

$$(1.7) \qquad |Ucmpeak| \leq |UAL-| - |Ui2| - |Uromax| - |Uacpeak|$$

avec

$$(1.8) \qquad Uromax = \Delta Imax * Ro$$

$$(1.9) \qquad \Delta Imax = (I1 - I2) \, max$$

La fréquence de coupure du filtre passe-haut 15 servant à découpler la composante continue (tension de repos de la boucle de courant):

$$(1.10) \qquad Fchp = 1/2 * \pi * \tau$$

$$(1.11) \qquad \tau = R * C = \text{constante de temps}$$

$$\text{du filtre passe-haut}$$

Le gain de l'amplificateur différentiel 18 à haute impédance d'entrée:

$$(1.12) \qquad G = Uout / Uac$$

## Revendications

1. Circuit électronique ayant la fonction d'une interface entre un capteur piézo-électrique (11) et un circuit (12) pour le traitement du signal de mesure obtenu avec ledit capteur, ledit circuit électronique d'interface servant d'une part à alimenter le dit capteur piézo-électrique (11) avec un courant constant et d'autre part à conditionner un signal électrique obtenu de ce capteur (11) à travers un modulateur de tension (13), ledit circuit électronique d'interface étant connecté audit modulateur de tension (13) par un câble (14, 34) ayant deux terminaux à chacun de ces bouts, les deux terminaux (F, G) d'un premier bout du câble (14, 34) étant connectés à la sortie du modulateur de tension (13) et les deux terminaux (C, D) d'un deuxième bout du câble (14, 34) étant connectés au dit circuit électronique d'interface,
ledit circuit électronique d'interface étant **caractérisé en ce qu'**il comprend

   (a) une première source de courant (15) destinée à fournir un premier courant constant (I1) audit capteur (11) à travers une boucle de courant électrique,
   (b) une deuxième source de courant (16) destinée à absorber un deuxième courant constant (I2), lequel retourne du dit capteur (11) au dit circuit électronique à travers la dite boucle lorsque ledit capteur (11) est alimenté avec ledit premier courant (I1),
   (c) au moins un élément passif permettant d'absorber la différence entre le premier courant constant (I1) et le deuxième courant constant (I2).

2. Circuit électronique selon la revendication 1, dans lequel ledit au moins un élément passif est une impédance (Zo), laquelle est branchée en parallèle entre la borne (Q) d'entrée de courant de la deuxième source de courant (16) et la masse (M) du circuit électronique d'interface, la dite impédance (Zo) se composant d'une résistance électrique

(Ro) branchée en parallèle avec un condensateur (Co), la dite résistance électrique (Ro) étant destinée à absorber un courant électrique égal à la différence entre le premier courant constant (I1) et le deuxième courant constant (I2).

3. Circuit électronique selon une des revendications précédentes 1 ou 2, lequel comporte en plus

(d) un filtre passe-haut (17) servant à recevoir un signal électrique obtenu du dit capteur (11) à travers le dit câble (14, 34), à éliminer la composante continue du dit signal et à fournir un signal de sortie (Uout) sans ladite composante, et
(e) un premier étage amplificateur différentiel (18) ayant une haute impédance d'entrée, l'entrée dudit étage étant connectée avec la sortie du dit filtre passe-haut (17).

4. Circuit électronique selon une des revendications précédentes 1 à 3, lequel comprend en plus un filtre (19) pour l'élimination de perturbations électromagnétiques, ledit filtre (19) étant inséré entre les terminaux (C, D) du deuxième bout du câble et les terminaux d'entrée (P, Q) du dit filtre passe-haut.

5. Circuit électronique selon une des revendications précédentes 1 à 4, lequel comporte

(a) un deuxième étage amplificateur différentiel (48) ayant une haute impédance d'entrée, lequel reçoit à son entrée un signal électrique obtenu du dit capteur (11) à travers le dit câble (14, 34), et
b) un filtre passe-bas (47) dont l'entrée est connectée avec la sortie du dit deuxième étage amplificateur différentiel (48), ledit filtre passe-bas (47) servant à éliminer la composante du dit signal, laquelle correspond à la grandeur physique mesurée avec le capteur, et à fournir comme signal de sortie un signal représentatif de la composante continue dudit signal.

6. Circuit électronique selon une des revendications précédentes 1 à 4, lequel comporte

a) un filtre passe-bas (57) ayant une haute impédance d'entrée, lequel reçoit à son entrée un signal électrique obtenu du dit capteur (11) à travers le dit câble (14, 34), et lequel sert à éliminer la composante du dit signal obtenu avec le capteur, laquelle correspond à la grandeur physique mesurée avec celui-ci, et à fournir comme signal de sortie un signal représentatif de la composante continue dudit signal, et
(b) un étage amplificateur (58) dont l'entrée est connectée avec la sortie du dit filtre passe-bas (57) et dont le signal de sortie permet de détecter un dysfonctionnement au niveau de la connexion entre le capteur et le circuit électronique d'interface.

**Patentansprüche**

1. Elektronische Schaltung, welche als Schnittstelle zwischen einem piezoelektrischen Aufnehmer (11) und einer Schaltung (12) zur Verarbeitung des vom genannten Aufnehmer erhaltenen Signals dient, wobei die elektronische Interface-Schaltung einerseits zur Versorgung des piezoelektrischen Aufnehmers (11) mit einem konstanten Strom und andererseits zur Aufbereitung eines vom Aufnehmer (11) über einen Spannungsmodulator (13) erhaltenen elektrischen Signals dient und die elektronische Interface-Schaltung mit dem Spannungsmodulator (13) über ein Kabel (14, 34) mit je zwei Anschlüssen an beiden Enden verbunden ist, wobei die zwei Anschlüsse (F, G) am einem ersten Ende des Kabels (14, 34) mit dem Ausgang des Spannungsmodulators (13) und die zwei Anschlüsse (C, D) am zweiten Ende des Kabel (14, 34) mit der elektronischen Interface-Schaltung verbunden sind, **dadurch gekennzeichnet, dass** die elektronische Interface-Schaltung

(a) eine erste Stromquelle (15) zur Versorgung des Aufnehmers (11) mit einem ersten Konstantstrom (I1) über eine elektrische Stromschleife aufweist,
(b) eine zweite Stromquelle (16) zur Absorption eines zweiten Konstantstroms (I2), der vom Aufnehmer (11) über die genannte Schleife zur elektronischen Schaltung zurückfliesst, wenn der Aufnehmer (11) mit dem ersten Strom (I1) gespeist wird,
(c) mindestens ein passives Element zur Absorption der Differenz zwischen dem ersten Konstantstrom (I1) und dem zweiten Konstantstrom (I2).

2. Elektronische Schaltung nach Anspruch 1, worin das genannte mindestens eine passive Element eine Impedanz (Zo) ist, welche parallel zwischen dem Stromeingangsanschluss (Q) der zweiten Stromquelle (16) und der Masse (M) der elektronischen Interface-Schaltung liegt und einen elektrischen Widerstand (Ro) und einen parallel dazu geschalteten Kondensator (Co) umfasst, wobei der elektrische Widerstand (Ro) dazu vorgesehen ist, einen der Differenz zwischen dem ersten Konstantstrom (I1) und dem zweiten Konstantstrom (I2) entsprechenden elektrischen Strom zu absorbieren.

3. Elektronische Schaltung nach einem der vorangehenden Ansprüche 1 oder 2, weiterhin enthaltend

(d) ein Hochpassfilter (17), dem über das genannte Kabel (14, 34) ein vom Aufnehmer (11) erhaltenes elektrisches Signal zugeführt wird, zur Beseitigung der Gleichstromkomponente des Signals und zur Bildung eines Ausgangssignals (Uout) ohne diese Komponente, und
(e) eine erste Differenzverstärkerstufe (18) mit hoher Eingangsimpedanz, deren Eingang mit dem Ausgang des Hochpassfilters (17) verbunden ist.

4. Elektronische Schaltung nach einem der vorangehenden Ansprüche 1 bis 3, weiterhin enthaltend ein Filter (19) zum Ausfiltern von elektromagnetischen Störungen, welches zwischen den Anschlüssen (C, D) des zweiten Kabelendes und den Eingangsanschlüssen (P, Q) des Hochpassfilters liegt.

5. Elektronische Schaltung nach einem der vorangehenden Ansprüche 1 bis 4, mit

(a) einer zweiten Differenzverstärkerstufe (48) mit hoher Eingangsimpedanz, an deren Eingang ein über das Kabel (14, 34) vom Aufnehmer (11) erhaltenes elektrisches Signal anliegt, und
(b) ein Tiefpassfilter (47), dessen Eingang mit dem Ausgang der zweiten Differenzverstärkerstufe (48) verbunden ist, zum Ausfiltern der Komponente des Signals, welche der mit dem Aufnehmer gemessenen physikalischen Grösse entspricht, und zur Erzeugung eines Ausgangssignals, das der Gleichstromkomponente dieses Signals entspricht.

6. Elektronische Schaltung nach einem der vorangehenden Ansprüche 1 bis 4, mit

a) einem Tiefpassfilter (57) mit hoher Eingangsimpedanz, an dessen Eingang ein über das Kabel (14, 34) vom Aufnehmer (11) erhaltenes elektrisches Signal anliegt, zum Ausfiltern der Komponente des vom Aufnehmer erhaltenen Signals, welche der mit demselben gemessenen physikalischen Grösse entspricht, und zur Erzeugung eines Ausgangssignals, das der Gleichstromkomponente dieses Signals entspricht, und
(b) einer Verstärkerstufe (58), deren Eingang mit dem Ausgang des Tiefpassfilters (57) verbunden ist, und deren Ausgangssignal einen Defekt in der Verbindung zwischen dem Aufnehmer und der elektronischen Interface-Schaltung festzustellen gestattet.

**Claims**

1. Electronic circuit serving as an interface between a piezoelectric transducer (11) and a circuit (12) for processing the measuring signal provided by the transducer, the electronic interface circuit serving for supplying the piezoelectric transducer (11) with a constant current, on one hand, and on the other hand, for conditioning an electric signal provided by the transducer (11) via a voltage modulator (13), the electronic interface circuit being connected to the voltage modulator (13) by a cable (14, 34) having two terminals at each end, the two terminals (F, G) at a first end of the cable (14, 34) being connected to the output of the voltage modulator (13) and the two terminals (C, D) at a second end of the cable (14, 34) being connected to the mentioned electronic interface circuit, the electronic interface circuit being **characterised in that** it comprises

(a) a first current source (15) for providing a first constant current (I1) to the transducer (11) through an electric current loop;
(b) a second current source (16) for absorbing a second constant current (I2) returning from the transducer (11) to the electronic circuit through the loop when the transducer (11) is supplied with the first current (I1);
(c) at least one passive element allowing for absorbing the difference between the first constant current (I1) and the second constant current (I2).

2. Electronic circuit according to claim 1, wherein the at least one passive element is an impedance (Zo) which is connected in parallel between the current input terminal (Q) of the second current source (16) and the ground (M) of the electronic interface circuit, the mentioned impedance (Zo) being composed of an electric resistor (Ro) connected in parallel to a capacitor (Co), the electric resistor (Ro) being intended to absorb an electric current that is equal to the difference between the first constant current (I1) and the second constant current (I2).

3.  Electronic circuit according to one of the preceding claims 1 or 2, further comprising

    (d) a high-pass filter (17) for receiving an electric signal provided by the transducer (11) via the cable (14, 34), for eliminating the D.C. component of that signal, and for delivering an output signal (Uout) without that component, and
    (e) a first differential amplifier stage (18) having a high input impedance, the input of that stage being connected to the output of the high-pass filter (17).

4.  Electronic circuit according to one of the preceding claims 1 to 3, further comprising a filter (19) for eliminating electromagnetic interference, the filter (19) being inserted between the terminals (C, D) of the second cable end and the input terminals (P, Q) of the high-pass filter.

5.  Electronic circuit according to one of the preceding claims 1 to 4, comprising

    (a) a second differential amplifier stage (48) having a high input impedance and whose input receives an electric signal provided by the transducer (11) through the cable (14, 34), and
    (b) a low-pass filter (47) whose input is connected to the output of the second differential amplifier stage (48), the low-pass filter (47) servinq to eliminate the component of the signal which corresponds to the physical value measured by the transducer, and to deliver an output signal representative of the D.C. component of that signal.

6.  Electronic circuit according to one of the preceding claims 1 to 4, comprising

    (a) a low-pass filter (57) having a high input impedance and whose input receives an electric signal provided by the transducer (11) through the cable (14, 34), and which serves to eliminate the component of the signal provided by the transducer which corresponds to the physical value measured by the latter, and to deliver an output signal representative of the D.C. component of that signal, and
    (b) an amplifier stage (58) whose input is connected to the output of the low-pass filter (57) and whose output signal allows to detect a malfunction with respect to the connection between the transducer and the electronic interface circuit.

Fig. 1

Fig. 2

EP 0 965 819 B1

Fig. 3

Fig. 4

Fig. 5

Fig. 6